# FASCICULE DE BREVET EUROPEEN

(11) **EP 3 363 103 B1**
(45) Date de publication et mention de la délivrance du brevet: **04.12.2019**
(21) Numéro de dépôt: 16790645.2
(22) Date de dépôt: 03.10.2016
(51) Int. Cl.: B60L 3/00, F01M 5/00, H02K 5/20, F01M 11/00, H02K 9/19, H02K 7/116

(54) **DISPOSITIF DE GESTION THERMIQUE D'UN GROUPE MOTOPROPULSEUR ÉLECTRIQUE**
VORRICHTUNG ZUR WÄRMEVERWALTUNG EINES ELEKTRISCHEN ANTRIEBSSTRANGS
DEVICE FOR THE THERMAL MANAGEMENT OF AN ELECTRIC POWER TRAIN

(30) Priorité: 15.10.2015 FR 1559797
(43) Date de publication de la demande: 22.08.2018
(73) Titulaire: Renault S.A.S., 92100 Boulogne-Billancourt (FR); Nissan Motor Co., Ltd., Yokohama-shi, Kanagawa 221-0023 (JP)
(72) Inventeur: YU, Robert, 78180 Montigny Le Bretonneux (FR)
(74) Mandataire: Rougemont, Bernard
(86) Numéro de dépôt international: PCT/FR2016/052521
(87) Numéro de publication internationale: WO 2017/064390

(56) Documents cités:
- WO-A1-2014/125856
- FR-A1- 2 816 354
- US-A1- 2014 174 856

## Description

La présente invention concerne un dispositif de gestion thermique d'un groupe motopropulseur d'un véhicule automobile, notamment de type électrique ou hybride.

Parmi les systèmes de refroidissement des moteurs électriques des véhicules électriques ou hybrides, il est connu d'utiliser l'huile de lubrification du système de transmission constitué par le réducteur de vitesse classiquement couplé au moteur électrique. L'utilisation de l'huile de lubrification du réducteur pour un refroidissement direct des éléments chauffants tels que bobines, aimants, tôles, du moteur électrique constitue en effet une solution relativement performante par rapport aux autres solutions connues telles que celles mettant en oeuvre un refroidissement à eau circulant autour du carter du moteur électrique ou encore à air, dans la mesure où l'huile peut être en contact direct avec toutes les pièces à refroidir. L'utilisation de l'huile de lubrification du réducteur pour refroidir les éléments chauffants du moteur électrique permet en outre de réduire les frottements à froid du système de transmission car l'huile de lubrification ainsi introduite dans le système de transmission est moins visqueuse du fait d'avoir été chauffée dans le moteur électrique. On connaît en particulier le document CN203645464 ou US-A-2014/0174856 qui décrivent un moteur et un réducteur refroidis par la même huile circulant dans un circuit mettant en commun l'huile de refroidissement du moteur et l'huile de lubrification du réducteur.

Le document FR 2 816 354 A1 décrit un dispositif de gestion de la température d'un moteur thermique et comporte pour cela un carter d'huile agencé dans une partie inférieure dudit carter. Ce carter comporte une cloison de séparation dudit carter principal en deux parties, ledit carter d'huile comprenant un passage de trop plein d'huile au travers de ladite cloison de séparation et, sous ledit passage de trop plein d'huile, une canalisation d'huile s'étendant au travers de ladite cloison de séparation 14 entre lesdites deux parties, ladite canalisation d'huile comportant une extrémité débouchant dans ledit carter d'huile pourvue d'une vanne de régulation du débit d'huile entre lesdites deux parties, pilotée par la température de l'huile, et une extrémité libre opposée, débouchant dans l'autre carter d'huile, ladite vanne pilotée étant adaptée pour fermer le passage d'huile dans ladite canalisation d'huile entre lesdites deux parties lorsque la température de l'huile d'un côté atteint un seuil de température prédéterminé, de sorte que l'huile stockée d'un côté et l'huile stockée de l'autre côté ne se mélangent pas tant que ledit seuil de température n'est pas atteint.

Ces systèmes de refroidissement nécessitent toutefois d'assurer une évacuation de la chaleur emmagasinée par l'huile utilisée conjointement pour le refroidissement du moteur et la lubrification du réducteur. On utilise à cet effet un échangeur thermique de type radiateur huile/air disposé en face avant du véhicule ou bien encore un échangeur huile/eau fixé au niveau du groupe motopropulseur et complété par un circuit d'eau et un radiateur d'échange eau/air en face avant du véhicule. En variante, les calories générées dans le moteur et dans le système de transmission peuvent être évacuées par un flux d'air, notamment un flux d'air sortant du ventilateur en face avant du condenseur de climatisation de l'habitacle du véhicule. Ce flux d'air, qui peut être ventilé soit par ce ventilateur soit par l'avancement du véhicule, circule autour de l'ensemble constitué par le carter moteur et le système de transmission pour assurer l'échange thermique souhaité.

On a pu constater que pour les véhicules de forte puissance, il s'avère nécessaire d'augmenter les performances d'échange thermique entre l'air et le carter du groupe motopropulseur électrique du véhicule.

De surcroît, lorsque l'ensemble moteur électrique et réducteur associé produit beaucoup de calories, il est souhaitable que la température de l'huile puisse être plus élevée afin de faciliter l'évacuation de l'énergie thermique produite vers l'échangeur thermique à air. Cependant, si le réducteur peut être lubrifié par une huile à une température de l'ordre de 130-145°C, dans le contexte d'une solution de refroidissement avec un circuit de circulation d'huile mettant en commun l'huile du moteur et l'huile de lubrification du réducteur, la température de cette dernière est limitée par les contraintes de fonctionnement du moteur qui imposent une température d'huile de l'ordre de 90-100°C. Aussi, à chaud, c'est-à-dire lorsque le groupe motopropulseur électrique produit beaucoup d'énergie thermique, la température de fonctionnement du réducteur est limitée, ce qui impacte défavorablement la capacité de refroidissement de l'air ventilé passant autour du carter du groupe motopropulseur. En effet, plus l'écart de température entre cet air ventilé et le carter du groupe motopropulseur exposé à ce flux d'air est important, meilleure est la performance globale de refroidissement du réducteur et de l'ensemble moteur électrique et réducteur associé.

Aussi, il existe un besoin pour un dispositif de gestion thermique d'un groupe motopropulseur électrique qui, tout en conservant les avantages liés à la mise en commun de l'huile du moteur et du réducteur, en particulier dans un fonctionnement à froid du groupe motopropulseur, pallie les inconvénients précités, en particulier lors du fonctionnement à chaud du groupe motopropulseur.

A cet effet, on propose un dispositif de gestion thermique d'un groupe motopropulseur électrique comprenant un carter principal logeant au moins un moteur électrique comprenant un circuit de refroidissement et un réducteur mécanique de vitesse couplé audit moteur et comprenant un circuit de lubrification apte à être connecté audit circuit de refroidissement dudit moteur, caractérisé en ce que ledit carter principal comprend un carter d'huile, commun audit circuit de refroidissement et audit circuit de lubrification, agencé dans une partie inférieure dudit carter principal, et une cloison de séparation dudit carter principal en deux parties, dans lesquelles sont agencés respectivement d'une part, ledit moteur et son circuit de refroidissement et, d'autre part, ledit réducteur et son circuit de lubrification, ledit carter d'huile comprenant un passage de trop plein d'huile au travers de ladite cloison de séparation et, sous ledit passage de trop plein d'huile, une canalisation d'huile s'étendant au travers de ladite cloison de séparation entre lesdites deux parties, ladite canalisation d'huile comportant une extrémité débouchant dans le carter d'huile côté réducteur pourvue d'une vanne de régulation du débit d'huile entre lesdites deux parties, pilotée par la température de l'huile, et une extrémité libre opposée, débouchant dans le carter d'huile côté moteur, ladite vanne pilotée étant adaptée pour fermer le passage d'huile dans ladite canalisation entre lesdites deux parties lorsque la température de l'huile côté réducteur atteint un seuil de température prédéterminé, de sorte que l'huile stockée côté moteur et l'huile stockée côté réducteur ne se mélangent pas lorsque ledit seuil de température est atteint.

Grâce à cet agencement, à un certain niveau de température d'huile du réducteur, par exemple de l'ordre de 90°C, correspondant à un fonctionnement à chaud de l'ensemble du système moteur plus transmission, le pilotage de la vanne en fermeture permet d'isoler, dans le carter d'huile, l'huile stockée dans la partie côté réducteur de l'huile stockée dans la partie côté moteur. Dans ces conditions de fonctionnement, l'huile côté moteur est donc séparée de l'huile côté réducteur, tandis que l'huile côté moteur est mise en commun avec l'huile côté réducteur, lors d'un fonctionnement à froid, par exemple pour une température d'huile inférieure à 90°C. La température de l'huile dans les deux parties, respectivement côté moteur et côté réducteur, peut donc être différenciée, de sorte que le réducteur peut, à chaud, autrement dit lorsque la température d'huile côté réducteur atteint le seuil de température prédéterminé, fonctionner à une température plus élevée que celle du moteur électrique. En effet, les températures de l'huile respectivement côté réducteur et côté moteur étant indépendantes dans la configuration de fermeture de la vanne, on peut laisser l'huile du côté du réducteur monter plus haut en température et donc augmenter la température de fonctionnement du réducteur. On peut ainsi augmenter la performance de refroidissement du réducteur et de l'ensemble moteur électrique et réducteur, sans dégrader le fonctionnement du moteur électrique. En outre, à froid, autrement dit lorsque la température de l'huile côté réducteur est inférieure au seuil de température prédéterminée, la vanne est passante et l'huile de refroidissement venant du moteur ayant emmagasinée de l'énergie thermique est mise en commun avec l'huile côté réducteur pour sa lubrification, permettant de lubrifier à froid le réducteur avec de l'huile chaude provenant du moteur, de sorte que les frottements du réducteur seront réduits et son rendement amélioré.

Ainsi, le dispositif de l'invention permet d'effectuer une différenciation, au sens où ils sont rendus indépendants l'un de l'autre, du circuit de refroidissement du moteur et du circuit de lubrification du réducteur, en fonction de la température de l'huile côté réducteur. Plus précisément, grâce à la vanne de gestion du débit d'huile intégré dans le carter d'huile, apte à contrôler sélectivement, en fonction de la température de l'huile, l'autorisation ou l'interdiction de la circulation de l'huile entre les deux parties côté moteur et côté réducteur, le dispositif de l'invention permet, à froid, de mettre l'huile de refroidissement du moteur en commun avec l'huile de lubrification du réducteur et, à chaud, de séparer l'huile du moteur de l'huile du réducteur.

Selon un mode de réalisation, ladite extrémité libre opposée de ladite canalisation d'huile coopère avec une entrée d'huile dudit circuit de refroidissement par laquelle ledit circuit de refroidissement est apte à aspirer l'huile d'une part, depuis ladite canalisation d'huile et, d'autre part, directement depuis ladite partie côté moteur dudit carter d'huile.

De préférence, ladite entrée d'huile comporte une conduite d'entrée de section sensiblement supérieure à celle de ladite canalisation d'huile, de sorte que ladite canalisation d'huile et ladite conduite d'entrée sont disposées en regard l'une de l'autre avec un jeu entre elles permettant audit circuit de refroidissement d'aspirer l'huile de ladite partie dudit carter d'huile côté moteur au travers dudit jeu lorsque ladite vanne de régulation de débit est fermée.

Avantageusement, ledit circuit de refroidissement comprend une pompe à huile reliée d'une part, à ladite entrée d'huile et, d'autre part, à un circuit de distribution d'huile dudit circuit de refroidissement permettant la projection de l'huile aspirée par la pompe sur les éléments chauffants dudit moteur électrique de manière à refroidir ledit moteur, tandis que l'huile ainsi projetée est récupérée dans ladite partie dudit carter d'huile côté moteur.

Avantageusement, ledit moteur électrique comprend un carter de moteur comportant un fond vers lequel l'huile projetée par ledit circuit de distribution sur les éléments chauffants du moteur s'écoule par gravité et un orifice d'écoulement pratiqué au voisinage dudit fond permettant le retour par gravité de l'huile dans ladite partie dudit carter d'huile côté moteur.

De préférence, ledit circuit de lubrification comprend une pompe à huile apte à aspirer l'huile depuis ladite partie du carter d'huile côté réducteur, ladite pompe à huile étant reliée à un circuit de distribution dudit circuit de lubrification permettant la projection de l'huile aspirée par la pompe sur des éléments tournants dudit réducteur de manière à lubrifier ledit réducteur.

Avantageusement, le dispositif peut comprendre une conduite de dérivation reliant ledit circuit de distribution d'huile dudit circuit de refroidissement et ledit circuit de distribution d'huile dudit circuit de lubrification de part et d'autre de ladite cloison de séparation, ladite conduite de dérivation étant équipée d'un thermostat apte à contrôler sélectivement la circulation d'huile dans la conduite de dérivation en fonction de la température de l'huile, la circulation étant autorisée dans une condition de température inférieure audit seuil de température prédéterminé et interdite dans une condition de température supérieure audit seuil de température prédéterminé.

Selon un autre mode de réalisation, ladite extrémité de ladite canalisation d'huile pourvue de ladite vanne de régulation de débit coopère avec une entrée d'huile dudit circuit de lubrification par laquelle ledit circuit de lubrification est apte à aspirer l'huile d'une part, depuis ladite canalisation d'huile et, d'autre part, directement depuis ladite partie côté réducteur dudit carter d'huile.

De préférence, ladite entrée d'huile comporte une conduite d'entrée de section sensiblement supérieure à celle de ladite canalisation d'huile, de sorte que ladite canalisation d'huile et ladite conduite d'entrée sont disposées en regard l'une de l'autre avec un jeu entre elles permettant audit circuit de lubrification d'aspirer l'huile de ladite partie dudit carter d'huile côté réducteur au travers dudit jeu lorsque ladite vanne de régulation de débit est fermée.

Avantageusement, ledit circuit de lubrification comprend une pompe à huile reliée d'une part, à ladite entrée l'huile et, d'autre part, à un circuit de distribution d'huile dudit circuit de lubrification permettant la projection de l'huile aspirée par la pompe sur des éléments tournants dudit réducteur de manière à lubrifier ledit réducteur.

Avantageusement, ledit carter principal comprend dès parois extérieures munies d'une pluralité d'ailettes de refroidissement.

L'invention concerne également un véhicule automobile comprenant un dispositif de gestion thermique tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux figures annexées dans lesquelles :
- la figure 1 est un schéma illustrant le dispositif de gestion thermique de l'invention selon un premier mode de réalisation dans une condition de fonctionnement à froid ;
- la figure 2 est un schéma illustrant le dispositif de la figure 1 dans une condition de fonctionnement à chaud ;
- la figure 3 illustre une variante du premier mode de réalisation ;
- la figure 4 illustre encore une variante du premier mode de réalisation ;
- la figure 5 est un schéma illustrant le dispositif de gestion thermique de l'invention selon un deuxième mode de réalisation dans une condition de fonctionnement à froid ;
- la figure 6 est un schéma illustrant le dispositif de la figure 5 dans une condition de fonctionnement à chaud.

Dans les figures, les éléments en commun portent les mêmes références.

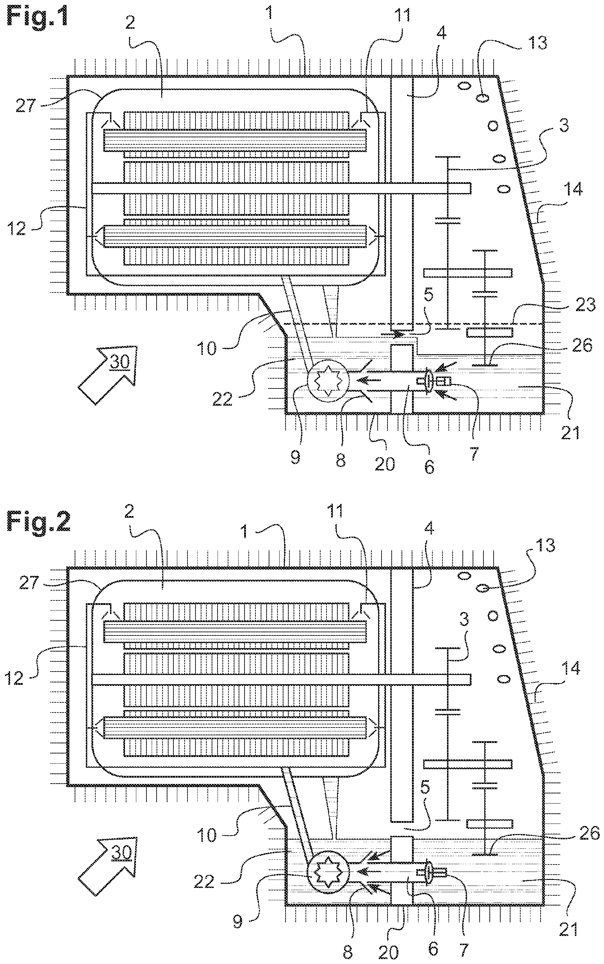

Selon le mode de réalisation illustré à la figure 1, le dispositif de gestion thermique comprend un carter principal 1, dont les parois extérieures exposées à un flux d'air 30 sont équipées d'ailettes de refroidissement 14, favorisant l'échange thermique entre les parois du carter principal et le flux d'air. Selon l'exemple de la figure 1, un moteur électrique 2 est intégré à l'intérieur du carter principal 1. Toutefois, plusieurs moteurs pourraient être intégrés sans sortir du cadre de la présente invention. Le moteur électrique 2 est destiné à propulser un véhicule électrique ou hybride dans lequel il est embarqué et/ou à récupérer son énergie cinétique lors d'une phase de freinage du véhicule. Le carter principal 1 intègre également un réducteur mécanique de vitesse 3 couplé au moteur électrique 2 à l'intérieur du carter principal 1 et constitué d'un système de pignons destiné à faire varier la vitesse de rotation et le couple du moteur électrique 2 par rapport à la vitesse du véhicule.

Le carter principal 1 comporte une cloison de séparation 4 qui permet de séparer le volume intérieur du carter en deux parties, respectivement une partie où est agencé le moteur électrique 2 et une partie où est agencé le réducteur 3. La partie inférieure du carter principal 1 définit en outre un carter d'huile 20 s'étendant de part et d'autre de la cloison de séparation 4, et destiné à stocker l'huile de lubrification 21 du réducteur 3 et l'huile de refroidissement 22 du moteur électrique 2. Un passage 5 de trop plein d'huile est prévu au travers de la cloison de séparation 4 dans une partie inférieure de celle-ci, de sorte que le niveau d'huile 23 dans le carter d'huile 20 avant le démarrage du véhicule, c'est-à-dire lorsque l'ensemble de l'huile de refroidissement et de lubrification est tombé dans le carter d'huile 20, est situé sensiblement au-dessus du passage de trop plein d'huile 5.

Le carter d'huile comprend également, disposé au-dessous du passage de trop plein 5, une canalisation d'huile 6 qui s'étend au travers de la cloison de séparation 4 et qui permet de faire communiquer les deux parties respectivement côté moteur et côté réducteur. La canalisation d'huile 6 comporte une extrémité débouchant dans le carter d'huile côté réducteur 3, qui est pourvue d'une vanne 7 de régulation du débit d'huile entre les deux parties, pilotée par la température de l'huile, et une extrémité libre opposée, débouchant dans le carter d'huile côté moteur. La vanne 7 pilotée par la température de l'huile côté réducteur est adaptée pour fermer le passage d'huile dans la canalisation d'huile 6 entre les deux parties côté réducteur et côté moteur, lorsque la température de l'huile côté réducteur atteint un seuil de température prédéterminé, par exemple 90°C. La vanne 7 pilotée par la température de l'huile côté réducteur comprend par exemple un thermostat actionné par une capsule de cire qui est agencée pour agir sur un clapet monté sur la canalisation d'huile 6 aussitôt que la température de cette capsule de cire dépasse le seuil de température prédéterminé. De cette manière, la vanne 7 permet d'autoriser la circulation d'huile au travers de la canalisation d'huile 6 entre les deux parties côté moteur et côté réducteur lorsque la température d'huile est inférieure au seuil de température prédéterminé, correspondant à une condition de fonctionnement à froid du groupe motopropulseur, et d'interdire cette circulation d'huile entre les deux parties lorsque la température d'huile atteint le seuil de température prédéterminé, correspondant à une condition de fonctionnement à chaud du groupe motopropulseur.

Suivant le mode de réalisation de la figure 1, l'extrémité libre opposée de la canalisation d'huile 6 qui débouche dans le carter d'huile côté moteur coopère avec une entrée d'huile 8 d'un circuit de refroidissement du moteur, qui est adapté pour aspirer l'huile du carter d'huile et pour projeter au moins une partie de l'huile sur des éléments chauffants du moteur électrique 2, par exemple sur les têtes de bobine du moteur, de manière à refroidir le moteur, tandis que l'huile ainsi projetée est récupérée dans la partie du carter d'huile côté moteur. Pour ce faire, le circuit de refroidissement du moteur comprend une pompe à huile 9 reliée d'une part, à l'entrée d'huile 8 et, d'autre part, à sa sortie, à un circuit de distribution d'huile 10, 12 permettant d'amener et de projeter l'huile 11 aspirée par la pompe 9 sur les éléments chauffants du moteur électrique 2. L'huile projetée récupère l'énergie thermique produite par le moteur 2 et retourne ensuite dans le carter d'huile par gravité. Plus précisément, le moteur électrique 2 comprend un carter de moteur 27 comportant un fond vers lequel l'huile projetée par les canaux de distribution 10, 12 sur les éléments chauffants du moteur s'écoule par gravité et un orifice d'écoulement pratiqué au voisinage du fond permettant le retour par gravité de l'huile dans la partie du carter d'huile côté moteur.

L'entrée d'huile 8 du circuit de refroidissement du moteur est plus particulièrement agencée pour permettre à la pompe 9 du circuit de refroidissement d'aspirer l'huile d'une part, depuis la canalisation d'huile 6 et, d'autre part, directement depuis la partie côté moteur du carter d'huile. Pour ce faire, suivant le mode de réalisation de la figure 1, l'entrée d'huile 8 comporte une conduite d'entrée de section sensiblement supérieure à celle de la canalisation d'huile 6, par exemple une section de forme sensiblement évasée, qui vient sensiblement alignée et en regard de l'extrémité libre de la canalisation d'huile 6 débouchant côté moteur, de sorte que la canalisation d'huile 6 et la conduite d'entrée 8 puissent être disposées en regard l'une de l'autre avec un certain jeu entre elles, permettant à la pompe 9 d'aspirer l'huile directement dans le carter d'huile côté moteur au travers de ce jeu lorsque la vanne 7 est fermée. Sinon, lorsque la vanne 7 est ouverte, l'huile est aspirée par la pompe 9 du circuit de refroidissement essentiellement depuis le carter d'huile côté réducteur à travers la canalisation d'huile 6, du fait de la différence des sections de passage d'huile constituées par la canalisation d'huile 6 d'une part, et par le jeu créé entre celle-ci et la conduite d'entrée 8. Par exemple, la section de passage d'huile constituée par le jeu créé entre la conduite d'entrée d'huile 8 reliée à la pompe 9 du circuit de refroidissement et la canalisation d'huile 6 venant en regard, est dimensionnée pour être de 3 à 5 fois plus petite que la section de passage d'huile du côté de la vanne 7, définie par la section de la canalisation d'huile 6.

Ainsi, comme indiqué plus haut, avant le démarrage du véhicule, le système est froid, l'ensemble de l'huile est tombé dans le carter d'huile 20 en partie inférieure du carter principal 1 et le niveau d'huile 23 est juste au-dessus du passage de trop plein d'huile. Dans ces conditions, la vanne 7 est passante, de sorte que la circulation d'huile est autorisée dans la canalisation d'huile 6 entre les deux parties côté moteur et côté réducteur du carter d'huile 20. Le démarrage du véhicule actionne la pompe 9 du circuit de refroidissement, qui aspire l'huile en provenance essentiellement de la partie du carter d'huile côté réducteur au travers de la section de passage d'huile constituée par la canalisation d'huile 6 (le cheminement de l'huile aspirée est symbolisé par des flèches sur la figure 1), tandis qu'une très faible quantité d'huile est aspirée directement depuis la partie du carter d'huile côté moteur, du fait des différences de dimensionnement des sections de passage d'huile concernées, comme expliqué ci-dessus.

L'aspiration de l'huile essentiellement depuis la partie du carter d'huile côté réducteur fait baisser le niveau d'huile 23. L'huile ainsi aspirée alimente à travers la pompe 9 le circuit de distribution 10, 12, qui amène l'huile jusqu'aux éléments chauffants du moteur à refroidir, où elle est projetée, par exemple sur les têtes de bobine. L'huile retombe ensuite par gravité dans la partie du carter d'huile côté moteur. Du côté du réducteur, ce dernier est adapté pour projeter, lorsqu'il est entraîné en mouvement, l'huile stockée dans la partie du carter d'huile côté réducteur contre des parois intérieures du carter principal. Ainsi, le système de pignons constituant le réducteur 3 est partiellement immergé dans l'huile stockée dans la partie du carter d'huile côté réducteur, les dents de pignon 26 amènent l'huile vers le haut du carter et la vitesse de rotation projette en même temps l'huile 13 vers les parois intérieures du carter, où l'huile cède ses calories au travers d'un échange thermique avec le carter, qui les cède à l'air 30 circulant autour du carter.

Le niveau d'huile dans le carter d'huile côté réducteur diminue plus rapidement que le niveau d'huile dans la partie du carter d'huile côté moteur. En effet, l'huile stockée côté réducteur est aspiré par la pompe 9 du circuit de refroidissement plus rapidement que l'huile stockée côté moteur, qui n'est que faiblement aspirée à travers le jeu laissé entre la conduite d'entrée 8 du circuit de refroidissement et la canalisation d'huile 6. L'huile côté réducteur est en outre projetée par les pignons du réducteur vers les parois intérieures du carter, ce qui contribue également à diminuer le niveau d'huile côté réducteur plus vite que celui côté moteur. Côté moteur, l'huile chauffée par le moteur et recueillie par gravité dans le carter d'huile peut passer du côté moteur vers le côté réducteur à travers le passage de trop plein d'huile 5 pratiqué dans la cloison de séparation. Ainsi, l'huile chauffée dans le moteur peut être introduite côté réducteur et être utilisée pour sa lubrification, ce qui permet avantageusement de réduire les frottements des pignons du réducteur, lorsque ce dernier est froid ou bien encore lorsque le moteur dégage plus de calories que le réducteur.

Après le démarrage, l'ensemble du système, autrement dit l'huile, le moteur, le réducteur et le carter, s'échauffe, ce qui se traduit par une élévation de température. En même temps, le flux d'air 30 circulant autour du carter principal 1 permet de refroidir l'ensemble du système par échange thermique avec les ailettes 14 équipant les parois extérieures du carter principal 1. Si la température ambiante n'est pas très élevée, un équilibre thermique peut s'établir et la température du système peut être maintenue à une température relativement basse, par exemple de l'ordre de 60°C à 90°C. Par contre, lorsque la température ambiante est relativement élevée, par exemple de l'ordre de 45°C, le flux d'air circulant autour du carter n'est pas suffisant pour maintenir la température d'huile suffisamment basse, par exemple inférieure à 90°C. Le réducteur supporte beaucoup mieux les élévations de température que le moteur, de sorte que, dans ces conditions, il est souhaitable de laisser l'huile stockée dans le carter d'huile côté réducteur monter plus haut en température que l'huile côté moteur et donc, à chaud, de séparer l'huile côté moteur de l'huile côté réducteur.

Aussi, lorsque la température d'huile côté réducteur atteint un seuil de température, par exemple fixé à 90°C, la cire du thermostat équipant la vanne 7 se dilate et ferme le clapet du passage d'huile de la canalisation d'huile 6, interdisant donc la circulation d'huile à travers cette canalisation entre le côté réducteur et le côté moteur. Dans ces conditions, comme illustré à la figure 2 par les flèches symbolisant le cheminement de l'huile aspirée par la pompe 9 du circuit de refroidissement, la pompe 9 n'aspire que l'huile stockée côté moteur à travers le jeu créé entre la conduite d'entrée 8 du circuit de refroidissement et la canalisation d'huile 6, de sorte que le niveau d'huile côté moteur diminue jusqu'à passer au-dessous du passage de trop plein d'huile 5 reliant les côtés moteur et réducteur. De la sorte, l'huile du carter d'huile côté moteur est séparée de l'huile du carter d'huile côté réducteur. Leur température devient donc indépendante. On peut ainsi laisser monter la température de l'huile côté réducteur et préserver le bon fonctionnement du moteur électrique.

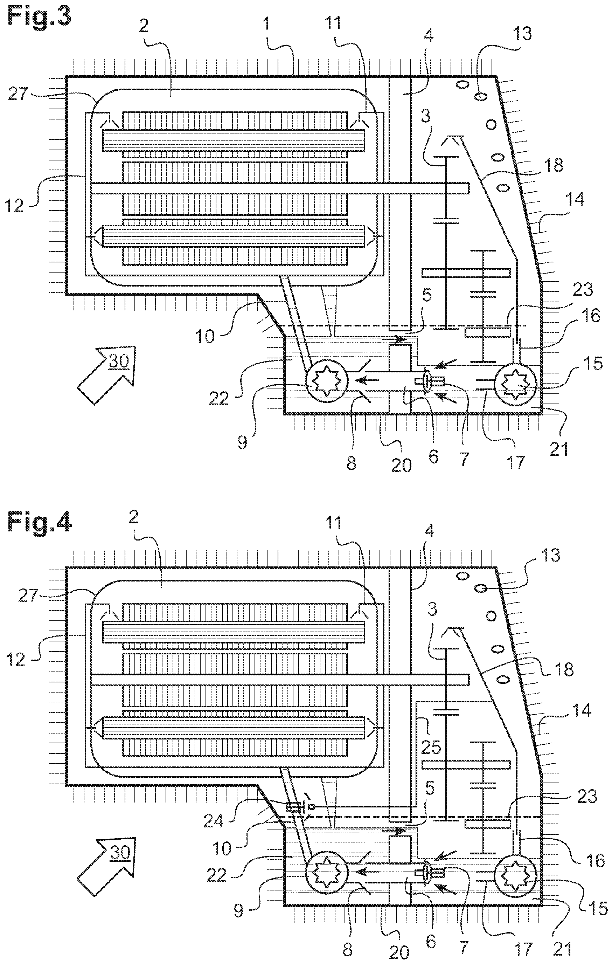

Suivant une variante de réalisation illustrée à la figure 3, la lubrification du réducteur peut nécessiter de mettre en oeuvre une lubrification par une pompe à huile. Dans ce cas, le circuit de lubrification comprend, côté réducteur, une pompe à huile 15 agencée pour aspirer l'huile depuis le carter d'huile côté réducteur par l'intermédiaire d'une entrée d'huile comprenant une conduite d'entrée 17 à laquelle elle est reliée, plongeant dans l'huile stockée côté réducteur, et une circuit de distribution d'huile 16, 18 relié en sortie de la pompe 15 et apte à amener l'huile vers les éléments tournant du réducteur 3 afin de les alimenter en huile.

La figure 4 illustre une variante de réalisation dans le cas où le circuit de lubrification du réducteur met en œuvre une pompe à huile, comme illustré à la figure 3. Selon cette variante, une conduite de dérivation 25 est prévue pour relier le circuit de distribution d'huile 10, 12 du circuit de refroidissement côté moteur et le circuit de distribution d'huile 16, 18 du circuit de lubrification côté réducteur, de part et d'autre de la cloison de séparation 4. On équipe en outre la conduite de dérivation 25 d'un thermostat 24 apte à contrôler sélectivement la circulation d'huile dans la conduite de dérivation 25 en fonction de la température de l'huile, la circulation étant autorisée dans une condition de température inférieure au seuil de température fixé et interdite dans une condition de température supérieure à ce seuil de température. Ainsi, lorsque la température est inférieure au seuil de température, par exemple 90°C, l'huile peut circuler dans la conduite de dérivation 25. Dans ce cas, la pompe 15 du circuit de lubrification ne fonctionne pas et c'est la pompe 9 du circuit de refroidissement qui alimente en huile à la fois le circuit de refroidissement pour le refroidissement du moteur et le circuit de lubrification pour la lubrification du réducteur. Par contre, à chaud, lorsque la température d'huile atteint le seuil de température, par exemple 90°C, le thermostat 24 commande la fermeture de la circulation d'huile au travers la conduite de dérivation 25. Dans ces conditions, la pompe 15 du circuit de lubrification alimente ce circuit en huile et la pompe 9 du circuit de refroidissement alimente ce circuit en huile. Les deux circuits deviennent ainsi indépendants dans ces conditions de température d'huile.

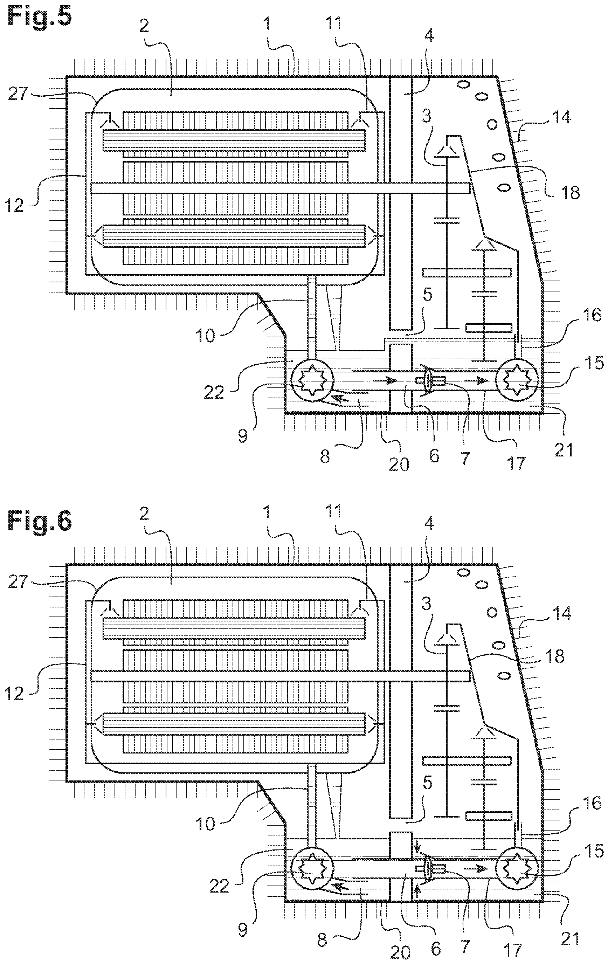

Les figures 5 et 6 illustrent un mode de réalisation dans lequel l'extrémité libre de la canalisation d'huile 6 débouche cette fois librement dans le carter d'huile côté moteur, tandis que la conduite d'entrée d'huile 8 du circuit de refroidissement reliée à l'entrée de la pompe à huile 9 est agencée dans le carter d'huile par exemple sous la canalisation d'huile 6, par exemple sous cette dernière.

L'autre extrémité de la canalisation d'huile 6 côté réducteur, qui est pourvue de la vanne 7, est alors prévue pour coopérer côté réducteur avec l'entrée d'huile 17 du circuit de lubrification du réducteur mettant en œuvre une pompe à huile 15, selon un mode de coopération similaire à celui décrit en référence à la figure 1 faisant intervenir l'extrémité libre de la canalisation d'huile 6 et la conduite d'entrée 8 du circuit de refroidissement.

Ainsi, l'entrée d'huile 17 du circuit de lubrification du réducteur est, selon ce mode de réalisation, agencée pour permettre à la pompe 15 du circuit de lubrification d'aspirer l'huile d'une part, depuis la canalisation d'huile 6 et, d'autre part, directement depuis la partie côté réducteur du carter d'huile. Pour ce faire, l'entrée d'huile 17 comporte une conduite d'entrée de section sensiblement supérieure à celle de la canalisation d'huile 6, par exemple une section de forme sensiblement évasée, qui vient sensiblement alignée et en regard de l'extrémité de la canalisation d'huile 6 pourvue de la vanne 7 débouchant côté réducteur, de sorte que la canalisation d'huile 6 et la conduite d'entrée 17 puissent être disposées en regard l'une de l'autre avec un certain jeu entre elles, permettant à la pompe 15 d'aspirer l'huile directement dans le carter d'huile côté réducteur au travers de ce jeu lorsque la vanne 7 est fermée. Sinon, lorsque la vanne 7 est ouverte, l'huile est aspirée par la pompe 15 du circuit de lubrification essentiellement depuis le carter d'huile côté moteur à travers la canalisation d'huile 6, du fait de la différence des sections de passage d'huile constituées par la canalisation d'huile d'une part, et par le jeu créé entre celle-ci et la conduite d'entrée 17. Par exemple, la section de passage d'huile constituée par le jeu créé entre la conduite d'entrée d'huile 17 du circuit de lubrification et la canalisation d'huile 6, est dimensionnée pour être de 3 à 5 fois plus petite que la section de passage d'huile du côté de la vanne 7, définie par la section de la canalisation d'huile 6.

Ainsi, comme pour le mode de réalisation précédent, lorsque la température d'huile côté réducteur est inférieure au seuil de température fixé, par exemple 90°C, la vanne 7 est passante et la lubrification du réducteur peut être effectuée avec de l'huile chauffée par le moteur, qui est aspirée depuis le carter d'huile côté moteur par la pompe 15 du circuit de lubrification côté réducteur, au travers de la canalisation d'huile 6 (figure 5). Lorsque la température de l'huile atteint le seuil de température fixé, le passage d'huile à travers la canalisation d'huile 6 est fermé, de sorte que la pompe 15 du circuit de lubrification n'aspire que l'huile stockée côté réducteur à travers le jeu créé entre la conduite d'entrée 17 du circuit de lubrification et la canalisation d'huile 6 et l'huile côté réducteur ne se mélange pas avec l'huile côté moteur (figure 6).

## Revendications

1. Dispositif de gestion thermique d'un groupe motopropulseur électrique d'un véhicule automobile électrique ou hybride, comprenant un carter principal (1) logeant au moins un moteur électrique (2) comprenant un circuit de refroidissement et un réducteur mécanique de vitesse (3) couplé audit moteur (2) et comprenant un circuit de lubrification apte à être connecté audit circuit de refroidissement dudit moteur, ledit carter principal (1) comprenant un carter d'huile (20), commun audit circuit de refroidissement et audit circuit de lubrification, agencé dans une partie inférieure dudit carter principal (1), **caractérisé en ce que** ledit carter principal comprend une cloison de séparation (4) dudit carter principal (1) en deux parties, dans lesquelles sont agencés respectivement d'une part, ledit moteur (2) et son circuit de refroidissement et, d'autre part, ledit réducteur (3) et son circuit de lubrification, ledit carter d'huile (20) comprenant un passage (5) de trop plein d'huile au travers de ladite cloison de séparation (4) et, sous ledit passage (5) de trop plein d'huile, une canalisation d'huile (6) s'étendant au travers de ladite cloison de séparation (4) entre lesdites deux parties, ladite canalisation d'huile comportant une extrémité débouchant dans ledit carter d'huile (20) côté réducteur pourvue d'une vanne (7) de régulation du débit d'huile entre lesdites deux parties, pilotée par la température de l'huile, et une extrémité libre opposée, débouchant dans ledit carter d'huile (20) côté moteur, ladite vanne (7) pilotée étant adaptée pour fermer le passage d'huile dans ladite canalisation d'huile (6) entre lesdites deux parties lorsque la température de l'huile côté réducteur atteint un seuil de température prédéterminé, de sorte que l'huile stockée côté moteur et l'huile stockée côté réducteur ne se mélangent pas lorsque ledit seuil de température est atteint.

2. Dispositif selon la revendication 1, **caractérisé en ce que** ladite extrémité libre opposée de ladite canalisation d'huile (6) coopère avec une entrée d'huile (8) dudit circuit de refroidissement par laquelle ledit circuit de refroidissement est apte à aspirer l'huile d'une part, depuis ladite canalisation d'huile (6) et, d'autre part, directement depuis ladite partie côté moteur dudit carter d'huile (20).

3. Dispositif selon la revendication 2, **caractérisé en ce que** ladite entrée d'huile (8) comporte une conduite d'entrée de section sensiblement supérieure à celle de ladite canalisation d'huile (6), de sorte que ladite canalisation d'huile (6) et ladite conduite d'entrée sont disposées en regard l'une de l'autre avec un jeu entre elles permettant audit circuit de refroidissement d'aspirer l'huile de ladite partie dudit carter d'huile côté moteur au travers dudit jeu lorsque ladite vanne de régulation de débit est fermée.

4. Dispositif selon l'une quelconque des revendications 2 ou 3, **caractérisé en ce que** ledit circuit de refroidissement comprend une pompe à huile (9) reliée d'une part, à ladite entrée d'huile (8) et, d'autre part, à un circuit de distribution d'huile (10, 12) dudit circuit de refroidissement permettant la projection de l'huile aspirée par la pompe sur les éléments chauffants dudit moteur électrique (2) de manière à refroidir ledit moteur, tandis que l'huile ainsi projetée est récupérée dans ladite partie dudit carter d'huile côté moteur.

5. Dispositif selon la revendication 4, **caractérisé en ce que** ledit moteur électrique (2) comprend un carter de moteur (27) comportant un fond vers lequel l'huile projetée par ledit circuit de distribution (10, 12) sur les éléments chauffants du moteur (2) s'écoule par gravité et un orifice d'écoulement pratiqué au voisinage dudit fond permettant le retour par gravité de l'huile dans ladite partie dudit carter d'huile côté moteur.

6. Dispositif selon l'une quelconque des revendications précédentes, **caractérisé en ce que** ledit circuit de lubrification comprend une pompe à huile (15) apte à aspirer l'huile depuis ladite partie du carter d'huile côté réducteur, ladite pompe à huile étant reliée à un circuit de distribution (16, 18) dudit circuit de lubrification permettant la projection de l'huile aspirée par la pompe sur des éléments tournants dudit réducteur (3) de manière à lubrifier ledit réducteur (3).

7. Dispositif selon les revendications 4 et 6, **caractérisé en ce qu'**il comprend une conduite de dérivation (25) reliant ledit circuit de distribution d'huile (10, 12) dudit circuit de refroidissement et ledit circuit de distribution d'huile (16, 18) dudit circuit de lubrification de part et d'autre de ladite cloison de séparation (4), ladite conduite de dérivation (25) étant équipée d'un thermostat (24) apte à contrôler sélectivement la circulation d'huile dans la conduite de dérivation (25) en fonction de la température de l'huile, la circulation étant autorisée dans une condition de température inférieure audit seuil de température prédéterminé et interdite dans une condition de température supérieure audit seuil de température prédéterminé.

8. Dispositif selon la revendication 1, **caractérisé en ce que** ladite extrémité de ladite canalisation d'huile (6) pourvue de ladite vanne (7) de régulation de débit coopère avec une entrée d'huile (17) dudit circuit de lubrification par laquelle ledit circuit de lubrification est apte à aspirer l'huile d'une part, depuis ladite canalisation d'huile (6) et, d'autre part, directement depuis ladite partie côté réducteur dudit carter d'huile.

9. Dispositif selon la revendication 8, **caractérisé en ce que** ladite entrée d'huile (17) comporte une conduite d'entrée de section sensiblement supérieure à celle de ladite canalisation d'huile, de sorte que ladite canalisation d'huile et ladite conduite d'entrée sont disposées en regard l'une de l'autre avec un jeu entre elles permettant audit circuit de lubrification d'aspirer l'huile de ladite partie dudit carter d'huile côté réducteur au travers dudit jeu lorsque ladite vanne (7) de régulation de débit est fermée.

10. Dispositif selon la revendication 9, **caractérisé en ce que** ledit circuit de lubrification comprend une pompe à huile (15) reliée d'une part, à ladite entrée l'huile (17) et, d'autre part, à un circuit de distribution d'huile (16, 18) dudit circuit de lubrification permettant la projection de l'huile aspirée par la pompe sur des éléments tournants dudit réducteur de manière à lubrifier ledit réducteur (3).

11. Dispositif selon l'une quelconque des revendications précédentes, **caractérisé en ce que** ledit carter principal (1) comprend des parois extérieures munies d'une pluralité d'ailettes (14) de refroidissement.

12. Véhicule automobile comprenant un dispositif de gestion thermique selon l'une quelconque des revendications précédentes.

## Patentansprüche

1. Vorrichtung zum Wärmemanagement eines elektrischen Antriebsstranges eines Elektro- oder Hybridkraftfahrzeugs, welche ein Hauptgehäuse (1) umfasst, in dem wenigstens ein Elektromotor (2), der einen Kühlkreislauf umfasst, und ein mechanisches Untersetzungsgetriebe (3), das mit dem Motor (2) gekoppelt ist und einen mit dem Kühlkreislauf des Motors verbindbaren Schmierkreislauf umfasst, untergebracht sind, wobei das Hauptgehäuse (1) ein Ölgehäuse (20), das dem Kühlkreislauf und dem Schmierkreislauf gemeinsam ist, umfasst, das in einem unteren Teil des Hauptgehäuses (1) angeordnet ist, **dadurch gekennzeichnet, dass** das Hauptgehäuse eine Trennwand zur Aufteilung (4) des Hauptgehäuses (1) in zwei Teile umfasst, in welchen einerseits der Motor (2) und sein Kühlkreislauf bzw. andererseits das Untersetzungsgetriebe (3) und sein Schmierkreislauf angeordnet sind, wobei das Ölgehäuse (20) einen Ölüberlaufdurchlass (5) durch die Trennwand (4) hindurch und unter dem Ölüberlaufdurchlass (5) einen Ölkanal (6), der sich durch die Trennwand (4) hindurch zwischen den zwei Teilen erstreckt, umfasst, wobei der Ölkanal ein auf der Seite des Untersetzungsgetriebes in das Ölgehäuse (20) mündendes Ende, das mit einem Ventil (7) zur Regelung der Öldurchflussmenge zwischen den zwei Teilen versehen ist, das durch die Öltemperatur gesteuert wird, und ein entgegengesetztes freies Ende, das auf der Seite des Motors in das Ölgehäuse (20) mündet, aufweist, wobei das gesteuerte Ventil (7) dafür ausgelegt ist, den Öldurchfluss im Ölkanal (6) zwischen den zwei Teilen zu schließen, wenn die Temperatur des Öls auf der Seite des Untersetzungsgetriebes einen vorbestimmten Temperaturschwellenwert erreicht, so dass das Öl, das auf der Seite des Motors gespeichert ist, und das Öl, das auf der Seite des Untersetzungsgetriebes gespeichert ist, sich nicht vermischen, wenn der Temperaturschwellenwert erreicht ist.

2. Vorrichtung nach Anspruch 1, **dadurch gekennzeichnet, dass** das entgegengesetzte freie Ende des Ölkanals (6) mit einem Öleinlass (8) des Kühlkreislaufs zusammenwirkt, durch welchen der Kühlkreislauf in der Lage ist, das Öl einerseits aus dem Ölkanal (6) und andererseits direkt aus dem auf der Seite des Motors befindlichen Teil des Ölgehäuses (20) anzusaugen.

3. Vorrichtung nach Anspruch 2, **dadurch gekennzeichnet, dass** der Öleinlass (8) eine Einlassleitung mit einem Querschnitt aufweist, der im Wesentlichen größer als derjenige des Ölkanals (6) ist, so dass der Ölkanal (6) und die Einlassleitung einander gegenüberliegend mit einem Zwischenraum zwischen ihnen angeordnet sind, der es ermöglicht, dass der Kühlkreislauf das Öl aus dem auf der Seite des Motors befindlichen Teil des Ölgehäuses durch den Zwischenraum hindurch ansaugt, wenn das Durchflussregelventil geschlossen ist.

4. Vorrichtung nach einem der Ansprüche 2 oder 3, **dadurch gekennzeichnet, dass** der Kühlkreislauf eine Ölpumpe (9) umfasst, die einerseits mit dem Öleinlass (8) verbunden ist, und andererseits mit einem Ölverteilungskreislauf (10, 12) des Kühlkreislaufs, der das Spritzen des von der Pumpe angesaugten Öls auf die sich erwärmenden Elemente des Elektromotors (2) ermöglicht, um diesen Motor zu kühlen, während das so gespritzte Öl in dem auf der Seite des Motors befindlichen Teil des Ölgehäuses wieder gesammelt wird.

5. Vorrichtung nach Anspruch 4, **dadurch gekennzeichnet, dass** der Elektromotor (2) ein Motorgehäuse (27) umfasst, das einen Boden, zu dem das durch den Verteilungskreislauf (10, 12) auf die sich erwärmenden Elemente des Motors (2) gespritzte Öl aufgrund der Schwerkraft fließt, und eine in der Nähe des Bodens ausgebildete Abflussöffnung, die das Zurückfließen des Öls aufgrund der Schwerkraft in den auf der Seite des Motors befindlichen Teil des Ölgehäuses ermöglicht, aufweist.

6. Vorrichtung nach einem der vorhergehenden Ansprüche, **dadurch gekennzeichnet, dass** der Schmierkreislauf eine Ölpumpe (15) umfasst, die in der Lage ist, das Öl aus dem auf der Seite des Untersetzungsgetriebes befindlichen Teil des Ölgehäuses anzusaugen, wobei diese Ölpumpe mit einem Verteilungskreislauf (16, 18) des Schmierkreislaufs verbunden ist, der das Spritzen des von der Pumpe angesaugten Öls auf rotierende Elemente des Untersetzungsgetriebes (3) ermöglicht, um das Untersetzungsgetriebe (3) zu schmieren.

7. Vorrichtung nach den Ansprüchen 4 und 6, **dadurch gekennzeichnet, dass** sie eine Umgehungsleitung (25) umfasst, die den Ölverteilungskreislauf (10, 12) des Kühlkreislaufs und den Ölverteilungskreislauf (16, 18) des Schmierkreislaufs beiderseits der Trennwand (4) verbindet, wobei die Umgehungsleitung (25) mit einem Thermostat (24) ausgestattet ist, der in der Lage ist, selektiv die Ölzirkulation in der Umgehungsleitung (25) in Abhängigkeit von der Temperatur des Öls zu steuern, wobei die Zirkulation unter der Bedingung einer Temperatur, die niedriger als der vorbestimmte Temperaturschwellenwert ist, ermöglicht wird und unter der Bedingung einer Temperatur, die höher als der vorbestimmte Temperaturschwellenwert ist, verhindert wird.

8. Vorrichtung nach Anspruch 1, **dadurch gekennzeichnet, dass** das mit dem Durchflussregelventil (7) versehene Ende des Ölkanals (6) mit einem Öleinlass (17) des Schmierkreislaufs versehen ist, durch welchen der Schmierkreislauf in der Lage ist, das Öl einerseits aus dem Ölkanal (6) und andererseits direkt aus dem auf der Seite des Untersetzungsgetriebes befindlichen Teil des Ölgehäuses anzusaugen.

9. Vorrichtung nach Anspruch 8, **dadurch gekennzeichnet, dass** der Öleinlass (17) eine Einlassleitung mit einem Querschnitt aufweist, der im Wesentlichen größer als derjenige des Ölkanals ist, so dass der Ölkanal und die Einlassleitung einander gegenüberliegend mit einem Zwischenraum zwischen ihnen angeordnet sind, der es ermöglicht, dass der Schmierkreislauf das Öl aus dem auf der Seite des Untersetzungsgetriebes befindlichen Teil des Ölgehäuses durch den Zwischenraum hindurch ansaugt, wenn das Durchflussregelventil (7) geschlossen ist.

10. Vorrichtung nach Anspruch 9, **dadurch gekennzeichnet, dass** der Schmierkreislauf eine Ölpumpe (15) umfasst, die einerseits mit dem Öleinlass (17) verbunden ist, und andererseits mit einem Ölverteilungskreislauf (16, 18) des Schmierkreislaufs, der das Spritzen des von der Pumpe angesaugten Öls auf rotierende Elemente des Untersetzungsgetriebes ermöglicht, um das Untersetzungsgetriebe (3) zu schmieren.

11. Vorrichtung nach einem der vorhergehenden Ansprüche, **dadurch gekennzeichnet, dass** das Hauptgehäuse (1) Außenwände umfasst, die mit einer Vielzahl von Kühlrippen (14) ausgestattet sind.

12. Kraftfahrzeug, welches eine Vorrichtung zum Wärmemanagement nach einem der vorhergehenden Ansprüche umfasst.

## Claims

1. Device for the thermal management of an electric power train of an electric or hybrid motor vehicle, comprising a main housing (1) accommodating at least an electric motor (2) comprising a cooling circuit and a mechanical speed reducer (3) coupled to said motor (2) and comprising a lubrication circuit capable of being connected to said cooling circuit of said motor, said main housing (1) comprising an oil sump (20), common to said cooling circuit and to said lubrication circuit, arranged in a lower part of said main housing (1), **characterized in that** said main housing comprises a partition (4) for the separation of said main housing (1) into two parts, in which there are arranged respectively, on the one hand, said motor (2) and its cooling circuit, and, on the other hand, said speed reducer (3) and its lubrication circuit, said oil sump (20) comprising an oil overflow passage (5) through said separating partition (4) and, beneath said oil overflow passage (5), an oil channel (6) extending through said separating partition (4) between said two parts, said oil channel including one end discharging into said oil sump (20) on the speed reducer side provided with a valve (7) for regulating the flow of oil between said two parts, controlled by the temperature of the oil, and one opposite free end, discharging into said oil sump (20) on the motor side, said controlled valve (7) being adapted to close the passage of oil in said oil channel (6) between said two parts when the temperature of the oil on the speed reducer side reaches a predefined temperature threshold, so that the oil stored on the motor side and the oil stored on the speed reducer side do not mix when said temperature threshold is reached.

2. Device according to Claim 1, **characterized in that** said opposite free end of said oil channel (6) cooperates with an oil inlet (8) of said cooling circuit, via which said cooling circuit is capable of sucking the oil, on the one hand, from said oil channel (6) and, on the other hand, directly from said part on the motor side of said oil sump (20).

3. Device according to Claim 2, **characterized in that** said oil inlet (8) includes an inlet pipe having a cross-section substantially greater than that of said oil channel (6), so that said oil channel (6) and said inlet pipe are disposed facing one another with a clearance between them allowing said cooling circuit to suck the oil from said part of said oil sump on the motor side through said clearance when said flow regulation valve is closed.

4. Device according to either one of Claims 2 and 3, **characterized in that** said cooling circuit comprises an oil pump (9) connected, on the one hand, to said oil inlet (8) and, on the other hand, to an oil distribution circuit (10, 12) of said cooling circuit allowing the projection of the oil sucked by the pump onto the heating elements of said electric motor (2) in such a way as to cool said motor, whereas the oil thus projected is collected in said part of said oil sump on the motor side.

5. Device according to Claim 4, **characterized in that** said electric motor (2) comprises a motor housing (27) including a floor, towards which the oil projected by said distribution circuit (10, 12) onto the heating elements of the motor (2) flows by gravity, and a flow orifice formed in the vicinity of said floor allowing the return by gravity of the oil into said part of said oil sump on the motor side.

6. Device according to any one of the preceding claims, **characterized in that** said lubrication circuit comprises an oil pump (15) capable of sucking the oil from said part of the oil sump on the speed reducer side, said oil pump being connected to a distribution circuit (16, 18) of said lubrication circuit allowing the projection of the oil sucked by the pump onto rotating elements of said speed reducer (3) in such a way as to lubricate said speed reducer (3).

7. Device according to Claims 4 and 6, **characterized in that** it comprises a bypass pipe (25) linking said oil distribution circuit (10, 12) of said cooling circuit and said oil distribution circuit (16, 18) of said lubrication circuit to either side of said separating partition (4), said bypass pipe (25) being equipped with a thermostat (24) capable of controlling selectively the circulation of oil in the bypass pipe (25) depending on the temperature of the oil, the circulation being permitted in a temperature condition that is lower than said predefined temperature threshold and being prevented in a temperature condition that is higher than said predefined temperature threshold.

8. Device according to Claim 1, **characterized in that** said end of said oil channel (6) provided with said flow regulation valve (7) cooperates with an oil inlet (17) of said lubrication circuit, via which said lubrication circuit is capable of sucking the oil, on the one hand, from said oil channel (6) and, on the other hand, directly from said part on the speed reducer side of said oil sump.

9. Device according to Claim 8, **characterized in that** said oil inlet (17) includes an inlet pipe having a cross-section substantially greater than that of said oil channel, so that said oil channel and said inlet pipe are disposed facing one another with a clearance between them allowing said lubrication circuit to suck the oil from said part of said oil sump on the speed reducer side through said clearance when said flow regulation valve (7) is closed.

10. Device according to Claim 9, **characterized in that** said lubrication circuit comprises an oil pump (15) connected, on the one hand, to said oil inlet (17) and, on the other hand, to an oil distribution circuit (16, 18) of said lubrication circuit allowing the projection of the oil sucked by the pump onto rotating elements of said speed reducer in such a way as to lubricate said speed reducer (3).

11. Device according to any one of the preceding claims, **characterized in that** said main housing (1) comprises external walls equipped with a plurality of cooling fins (14).

12. Motor vehicle comprising a thermal management device according to any one of the preceding claims.
